# EUROPÄISCHE PATENTANMELDUNG

(11) **EP 0 870 427 A2**
(43) Veröffentlichungstag der Anmeldung: **14.10.1998**
(21) Anmeldenummer: 98106143.5
(22) Anmeldetag: 03.04.1998
(51) Int. Cl.: A01G 31/00, C02F 3/00

(54) **Pflanzenbeet für eine Pflanzenbeetkläranlage**

(30) Priorität: 07.04.1997 DE 19714097
(71) Anmelder: Hugel, Hermann, 95361 Ködnitz (DE)
(72) Erfinder: Hugel, Hermann, 95361 Ködnitz (DE)
(74) Vertreter: Eichstädt, Alfred, Dipl.-Ing.

(57) **Zusammenfassung**

Die Erfindung betrifft ein Pflanzenbeet für eine Pflanzenbeetkläranlage zur Aufbereitung von Abwässern mit einem ein Korngemisch aufweisenden Bodenkörper, welcher von Sumpfpflanzen bewachsen ist und in welchem Mikroorganismen angesiedelt sind. Der Bodenkörper des Pflanzenbeets besteht aus einem verrottungsfesten, offenporigen Trägergranulat, beispielsweise einem Keramik- oder Kunststoffgranulat. Der Bodenkörper ist vorzugsweise auf einem aushebbaren Netzbehälter angeordnet, so daß bei einer Verschlämmung ein Ausheben und Freispülen des Trägergranulates erfolgen kann. Bei dem Netzbehälter kann es sich um einen Netzbehälter aus Kunststoff oder um verrottungsfeste Textilvliese handeln.

## Beschreibung

Die Erfindung betrifft ein Pflanzenbeet für eine Pflanzenbeetkläranlage zur Aufbereitung von Abwässern mit einem ein Korngemisch aufweisenden Bodenkörper, welcher von Sumpfpflanzen bewachsen ist und in welchem Mikroorganismen angesiedelt sind.

Aus dem Merkblatt ATV-A262 der Abwassertechnischen Vereinigung e.V. (ATV) vom Oktober 1996 ist ein Vorschlag für die Bemessung, den Bau und den Betrieb von Pflanzenbeeten für die biologische Behandlung kommunalen Abwassers bekannt. Nach diesem Vorschlag bestehen Pflanzenbeete aus einem mit Sumpfpflanzen bewachsenen sandig-kiesigen Bodenkörper, der fallweise auch mit geringen bindigen Anteilen versehen werden kann. Dieser Bodenkörper wird zum Zwecke einer biologischen Reinigung eines entschlammten sowie von groben Abfallteilen befreiten Abwassers horizontal oder vertikal durchströmt. Dieser Reinigungsvorgang beruht im wesentlichen auf den im Boden angesiedelten Mikroorganismen. Der Bodenkörper des bekannten Pflanzenbeetes, der aus einem sandigkiesigen Material besteht, weist enggestufte definierte Korngemische auf, wobei die wirksame Korngröße großer oder gleich 0,2 mm sein soll. Die Schichtdicke des Bodenkörpers soll bei vorwiegend horizontalem Durchfluß größer oder gleich 60 cm und bei vertikalem Durchfluß größer oder gleich 100 cm sein. Als Sumpfpflanzen können beispielsweise Schilf, Schwertlilien oder Rohrkolben verwendet werden.

Obwohl bei diesen bekannten Pflanzenbeetkläranlagen vor der Einleitung des Abwassers in das Pflanzenbeet eine Vorbehandlung bzw. Entschlammung zur Befreiung des Abwassers von Grob- und Schwimmstoffen erfolgt, ist davon auszugehen, daß der bekannte, aus einem Sand-Kiesfilter bestehende Bodenkörper mit der Zeit durch Schlammbildung verstopft wird, so daß die Notwendigkeit besteht, die verstopften Bodenkörperpartien des Pflanzenbeetes wieder aufzuarbeiten oder zu erneuern bzw. das Bodenmaterial teilweise oder komplett entsorgen zu müssen.

Ausgehend von diesem Stand der Technik liegt der Erfindung die Aufgabe zugrunde, ein Pflanzenbeet mit den im Oberbegriff des Anspruchs 1 angegebenen Merkmalen derart weiterzubilden, daß das Verschlämmen des Bodenkörpers verringert ist.

Diese Aufgebe wird bei einem Pflanzenbeet mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung ergeben sich aus den abhängigen Ansprüchen.

Die Vorteile der Erfindung bestehen insbesondere darin, daß durch die Verwendung von verrottungsfestem, offenporigem Trägergranulat als Bodenkörper im Vergleich zu einer Verwendung von Sand-Kies-Gemischen als Bodenkörper eine wesentliche Vergrößerung der wirksamen Oberfläche des Bodenkörpers als Lebensraum für die Mikroorganismen zum Abbau der organischen Schmutzfracht des Abwassers geschaffen wird. Bedingt durch die Korngröße des offenporigen Granulates ist ein Verschlämmen des Filterkörpers um ein Vielfaches geringer als bei Sand-Kies-Filtern mit der gleichen wirksamen Oberfläche. Dies hat zur Folge, daß die Wartungsintervalle für das Pflanzenbeet wesentlich größer sind als beim Vorliegen eines Pflanzenbeetes mit einem Sand-Kies-Filter. Dadurch wird der Betrieb der Pflanzenbeetkläranlege vereinfacht und verbilligt.

In den Patentansprüchen 2-5 sind vorteilhafte Materialien angegeben, aus denen der Bodenkörper bestehen kann.

Mittels des in einem der Ansprüche 6-10 angegebenen anhebbaren Netzbehälters, auf welchem der Bodenkörper angeordnet bzw. gelagert ist, wird die Wartungsfreundlichkeit eines Pflanzenbeetes weiter erhöht. Beim Auftreten einer Verstopfung des Bodenkörpers ist ein einfaches Ausheben des Netzbehälters mit dem darauf angeordneten Bodenkörper mittels einer geeigneten Hebevorrichtung möglich, z.B. eines Krans, so daß ein Freispülen des Bodenkörpers erfolgen kann. Dadurch wird in vorteilhafter Weise das bei Sand-Kies-Filtern erforderliche Auswechseln und Entsorgen des verstopften Bodenkörpers vermieden.

Weitere Vorteile der Erfindung ergeben sich aus der Erläuterung eines Ausführungsbeispiels anhand der Figuren.

Es zeigt
- FIG 1: eine schematische Querschnittsdarstellung zur beispielhaften Erläuterung des Aufbaus eines Pflanzenbeetes gemäß der Erfindung und
- FIG 2: eine schematische Skizze zur Veranschaulichung des Trägergranulates.

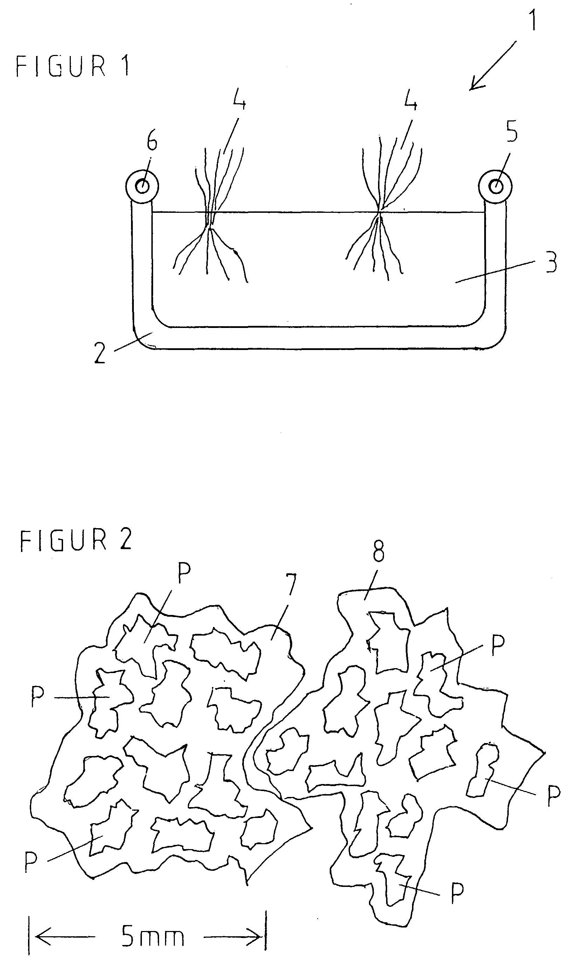

Die Figur 1 zeigt eine schematische Querschnittsdarstellung zur beispielhaften Erläuterung des Aufbaus eines Pflanzenbeetes gemäß der Erfindung. Das in der Figur gezeigte Pflanzenbeet 1 ist innerhalb einer nicht gezeichneten Beton- oder Kunststoffwanne auf einem aushebbaren Netzbehälter 2 angeordnet. Dieser besteht vorzugsweise aus einem verrottungsfesten Kunststoffmaterial oder aus verrottungsfestem textilen Material, beispielsweise verrottungsfesten Textilvliesen. Der äußere Rand dieses Netzbehälters 2 weist eine Vielzahl von Schlaufen auf, die in etwa äquidistant über den Umfang des Randes des Netzbehälters verteilt sind. Von diesen Schlaufen, die vorzugsweise aus dem selben Material wie der Netzbehälter 2 bestehen, sind in der Figur 1 zwei gezeichnet und mit den Bezugsziffern 5 und 6 versehen. Die Schlaufen des Netzbehälters 2 sind von einer Hebevorrichtung greifbar, so daß der gesamte Netzbehälter 2 inklusive des darauf angeordneten, von Sumpfpflanzen 4 bewachsenen Bodenkörpers 3 mittels einer Hebevorrichtung, beispielsweise eines Krans, aushebbar sind. Da die Schlaufen während des Aushebevorgangs einer sehr hohen Zugbelastung ausgesetzt sind, sind sie vorzugsweise verstärkt ausgebildet, so daß die Wahrscheinlichkeit eines Abreißens verringert ist.

Der Bodenkörper 3 des Pflanzenbeets 1 besteht aus einem verrottungsfesten, offenporigen Trägergranulat. Bei diesem Trägergranulat handelt es sich vorzugsweise um ein offenporiges Kunststoffgranulat oder um ein offenporiges Keramikgranulat, beispielsweise Blähschiefer oder Blähzton. Durch diese Offenporigkeit des Trägergranulates wird die wirksame Oberfläche, die als Lebensraum für die im Körper angesiedelten und für den Reinigungsvorgang bzw. den Abbau der organischen Schmutzfracht im Abwasser verantwortlichen Mikroorganismen zur Verfügung steht, im Vergleich zu einem Bodenkörper aus einem Sand-Kies-Gemisch um mehr als das 1000-fache vergrößert. Durch eine geeignete Wahl der Korngröße des Trägergranulats kann erreicht werden, daß die Zeitdauer bis zu einer Verschlämmung des Filterkörpers um ein Vielfaches größer ist als bei Sand-Kies-Filtern mit gleicher wirksamer Oberfläche.

Demnach wird mittels des vorstehend beschriebenen Pflanzenbeetes sowohl ein verbesserter Reinigungsvorgang als auch eine verbesserte Wartungsfreundlichkeit erreicht. Der verbesserte Reinigungsvorgang ist insbesondere auf die durch Verwendung von verrottungsfesten, offenporigen Trägergranulat beruhende wesentliche Vergrößerung der wirksamen Oberfläche und damit des Lebensraums für die Mikroorganismen zurückzuführen. Die verbesserte Wartungsfreundlichkeit basiert insbesondere auf der Verwendung eines aushebbaren Netzbehälters, auf dem das Trägergranulat gelagert ist, wobei nach dem Ausheben ein Freispülen des Trägergranulates erfolgen kann.

Die Figur 2 zeigt eine schematische Skizze zur Veranschaulichung des Trägergranulates. Dargestellt sind zwei mit den Bezugsziffern 7 und 8 bezeichnete Körner des Trägergranulates. Es ist ersichtlich, daß deren Außenflächen einen weitgehend unregelmäßigen, eine große Oberfläche bietenden Aufbau besitzen, wobei diese Oberfläche durch eine Vielzahl von offenen Poren, von denen einige in der Figur mit dem Bezugszeichen P versehen sind, erheblich weiter vergrößert wird. Die Verwendung von Granulat ermöglicht es auch in vorteilhafter Weise, das Korngemisch im Hinblick auf die Abmessungen der Körner sehr engstufig zu wählen, so daß diese Abmessungen auch in vorteilhafter Weise an die Größe der Poren des Netzes angepaßt werden können. Die Größe der Körner des Korngemisches kann im Bereich von 2 mm bis 10 mm liegen. Besonders gute Ergebnisse werden erzielt, wenn die Größe der Körner größer oder gleich 5 mm gewählt wird.

Wie aus der obigen Beschreibung hervorgeht, wird mittels der Erfindung ein biologischer Abbau der organischen Schmutzfracht des Abwassers unter Verwendung von offenporigem und damit großflächigem Granulat als Lebensraum für Mikroorganismen erreicht.

Dies bedeutet mit anderen Worten, dar ein Pflanzenbeet gemäß der Erfindung als Biokatalysator wirkt.

## Patentansprüche

1. Pflanzenbeet für eine Pflanzenbeetkläranlage zur Aufbereitung von Abwässern mit einem ein Korngemisch aufweisenden Bodenkörper, welcher von Sumpfpflanzen bewachsen ist und in welchem Mikroorganismen angesiedelt sind, **dadurch gekennzeichnet,** daß der Bodenkörper aus einem verrottungsfesten, offenporigen Trägergranulat besteht.

2. Pflanzenbeet nach Anspruch 1, **dadurch gekennzeichnet,** daß der Bodenkörper aus verrottungsfestem, offenporigen Kunststoffgranulat besteht.

3. Pflanzenbeet nach Anspruch 1, **dadurch gekennzeichnet,** daß der Bodenkörper aus verrottungsfestem, offenporigen Keramikgranulat besteht.

4. Pflanzenbeet nach Anspruch 3, **dadurch gekennzeichnet,** daß der Bodenkörper aus Blähschiefer besteht.

5. Pflanzenbeet nach Anspruch 3, **dadurch gekennzeichnet,** daß der Bodenkörper aus Blähton besteht.

6. Pflanzenbeet nach einem oder mehreren der vorhergehenden Ansprüche, **dadurch gekennzeichnet,** daß der Bodenkörper auf einem aushebbaren Netzbehälter angeordnet ist.

7. Pflanzenbeet nach Anspruch 6, **dadurch gekennzeichnet,** daß der Netzbehälter ein textiler Netzbehälter ist.

8. Pflanzenbeet nach Anspruch 6, **dadurch gekennzeichnet,** daß der Netzbehälter aus verrottungsfestem Kunststoff besteht.

9. Pflanzenbeet nach einem oder mehreren der Ansprüche 6 bis 8, **dadurch gekennzeichnet,** daß am äußeren Rand des Netzbehälters eine Vielzahl von Schlaufen vorgesehen ist, die von einer Hebevorrichtung greifbar sind.

10. Pflanzenbeet nach Anspruch 9, **dadurch gekennzeichnet,** daß die Schlaufen aus demselben Material bestehen wie der Netzbehälter und verstärkt ausgebildet sind.

11. Pflanzenbeet nach einem der vorhergehenden Ansprüche, **dadurch gekennzeichnet,** daß die Größe der Körner des Trägergranulates im Bereich zwischen 5 mm und 10 mm liegt.
